(19) Europäisches Patentamt
European Patent Office
Office européen des brevets

(11) **EP 3 315 221 B1**

(12) **EUROPÄISCHE PATENTSCHRIFT**

(45) Veröffentlichungstag und Bekanntmachung des Hinweises auf die Patenterteilung:
**05.12.2018   Patentblatt 2018/49**

(51) Int Cl.:
***B21C 51/00*** *(2006.01)*    ***B21D 7/14*** *(2006.01)*
***G01B 5/213*** *(2006.01)*

(21) Anmeldenummer: **17001827.9**

(22) Anmeldetag: **29.10.2017**

(54) **VORRICHTUNG ZUR TAKTILEN ERFASSUNG UND ANALYSE DER GEOMETRIE VON GEBOGENEN PROFILEN ODER ROHREN**

DEVICE FOR TACTILE DETECTION AND ANALYSIS OF THE GEOMETRY OF BENT PROFILES OR TUBES

DISPOSITIF DE DÉTECTION ET D'ANALYSE TACTILES DE LA GÉOMÉTRIE DES PROFILÉS OU DES TUYAUX CINTRÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.10.2016   DE 102016013144**

(43) Veröffentlichungstag der Anmeldung:
**02.05.2018   Patentblatt 2018/18**

(73) Patentinhaber: **Technische Universität Dortmund
44227 Dortmund (DE)**

(72) Erfinder:
• **Tekkaya, Erman A.
44227 Dortmund (DE)**
• **Staupendahl, Daniel
44229 Dortmund (DE)**
• **Schultz, Daniel
58099 Hagen (DE)**

(74) Vertreter: **Schneider, Uwe
Patentanwalt
Holbeinstrasse 27
59423 Unna (DE)**

(56) Entgegenhaltungen:
**DE-A1- 19 947 617     JP-A- S57 187 601
JP-B2- 3 102 199     US-A1- 2015 135 787**

**Beschreibung**

Die Erfindung betrifft eine Vorrichtung zur taktilen Erfassung und Analyse der Geometrie von gebogenen Profilen oder Rohren gemäß Oberbegriff des Anspruches 1 sowie eine Verwendung einer Vorrichtung gemäß Anspruch 20.

In der heutigen Zeit wird die Nachfrage nach individuellem Design immer größer. In der Biegeindustrie wird dieser Nachfrage durch das Angebot von Freiformbiegemaschinen begegnet. Diese arbeiten kinematisch, was bedeutet, dass sie allein durch deren Achsbewegungen die gewünschte Biegekontur von Rohren und Profilen erzeugen. Es werden keine Werkzeuge benötigt, die das komplette Biegebauteil abbilden. Einzig bei wechselnden Profilquerschnitten werden neue Werkzeuge benötigt. Das Positive bei der Verwendung dieser Freiformbiegemaschinen ist die hohe Flexibilität und die Kosteneffizienz auch bei kleinen Serien. Das Negative ist der hohe Einfluss der Materialeigenschaften und geometrischen Schwankungen des Bauteils auf das Biegeergebnis. Bei metallischen Bauteilen bedeutet dies, dass zunächst die Rückfederung kompensiert werden muss. In der Praxis geschieht dies durch die Nutzung von Methoden zur Rückfederungsberechnung und Biegetabellen, mit denen der Biegeprozess eingestellt wird. Für Biegeteile mit nichtkreisförmigem Querschnitt werden Lehren verwendet, um die Genauigkeit des Biegeergebnisses abzuschätzen. Diese Lehren müssen hierbei die gesamte Bauteilgröße abdecken. Dadurch, dass in diesen Lehren die einzelnen Krümmungen, die Profildrehwinkel (Winkel von zwei aufeinanderfolgenden Biegeebenen) und die Querschnittstorsion nicht direkt abgelesen werden können, entstehen Ungenauigkeiten, welche zu der Notwendigkeit führen, mehrere Probebiegungen durchzuführen, um den Biegeprozess mit der gewünschten Genauigkeit einzustellen.

Für Rohre mit kreisförmigem Querschnitt gibt es eine Reihe von Verfahren, die eine schnelle und effiziente Überprüfung von Geometriedaten ermöglichen.

Weit verbreitet ist die TubeInspect-Methode der Firma AICON 3D Systems. Es handelt sich hierbei um kompakte optische Vermessungsautomaten, wobei je nach Baugröße bis zu 16 Digitalkameras das von unten beleuchtete Profil erfassen und die Ergebnisse innerhalb von Sekunden auswerten. Die Software erstellt aus den aufgenommen Messdaten ein dreidimensionales Abbild des Rohres und kann zudem die Soll- und die Istkontur miteinander vergleichen. Allerdings kann diese Anlage nur runde Profile vermessen. Bei rechteckigen Profilen kann keine fehlerfreie Messung garantiert werden.

Ein weiteres optisches Messsystem, welches ähnlich wie die TubeInspect-Methode funktioniert, ist das "TUBOSCAN S" der Firma Tracto-Technik. Hierfür wird nur eine Kamera, aber mehrere Beleuchtungsquellen benötigt. Die Kamera nimmt den Schatten des Profils auf. Mit Änderung der Beleuchtungsquelle ändert sich der Schatten des Profils. Die Software erstellt aus den verschiedenen Schatten ein 3D-Modell des Profils. Auch hierbei können nur runde Profile vermessen werden.

Eine Alternative zur Messung von Profilen mit nichtrundem Querschnitt ist das Messsystem Movelnspect der Firma AICON 3D Systems. Dieses System ist eine Kombination aus optischer Messtechnik mittels hochauflösender Kameras und einer taktilen Messung mit einem Messtaster, der manuell über das Bauteil geführt wird. Mit diesem System können beliebige Flächen erfasst werden. Ein Bauteil mit einer Länge von 3 m kann in unter fünf Minuten vermessen werden. Um Konturdaten von Profilen abzuleiten, ist ein zusätzlicher Bearbeitungsprozess notwendig, da das System ähnlich wie eine Koordinatenmessmaschine arbeitet und zunächst nur eine Punktewolke erzeugt. Aus dieser Punktewolke müssen manuell die entsprechenden Konturdaten erzeugt werden.

Ein ähnliches System wird von der Firma TeZet angeboten. Zudem bietet diese Firma die Kombination eines Koordinatenmessarms und eines Linienscanners an, um Rohre vermessen zu können (sog. Laserline-Verfahren). Für Rohre erzeugt das System automatisch entsprechende Konturdaten. Mit der gleichen Methode lassen sich auch Profile mit nichtkreisförmigem Querschnitt einscannen und analysieren so lange sie über zweidimensionale Biegekonturen verfügen.

Eine Möglichkeit zum Vermessen dreidimensional gebogener Profile mit nichtkreisförmigem Querschnitt ist die Verwendung von Streifenprojektionsmethoden wie beispielsweise das System ATOS von der Gesellschaft für Optische Messtechnik (GOM). Hierbei wird mit einer Kamera die gesamte Fläche des Profils aus mehreren Winkeln gescannt und ein 3D-Modell erzeugt. Dieses kann anschließend in ein CAD-System importiert und die Radienwerte ermittelt werden. Schon alleine das Einscannen ist äußerst zeitintensiv. Die nachträgliche Generierung von Krümmungsdaten, Profildrehwinkeldaten und Querschnittstorsionsdaten kommt hier noch einmal hinzu. Für ein Profil mit 2m Länge können Gesamtbearbeitungszeiten von bis zu 5 Stunden anfallen. Es gibt robotorgesteuerte Messzellen von GOM, die eine automatisierte Digitalisierung ermöglichen, allerdings sind diese äußerst kostspielig und aus den digitalisierten Daten müssen im Nachhinein trotz allem die Konturdaten manuell generiert werden.

Die DE 199 47 617 A1 beschreibt Krümmungssensoren zur Erfassung von Biegeteilen mittels Tastrollen, die entweder nach den Flaschenzugprinzip oder nach dem Ziehharmonikaprinzip aneinander angeordnet sind.

Aus der DE 30 43 042 A1 ist eine Vorrichtung zur Messung der Krümmung einer einfach gekrümmten Oberfläche bekannt, bei der mit drei rollenartigen Kontaktelementen die hinsichtlich ihrer Krümmung zu messende Oberfläche abtastet und über geometrische Beziehungen zwischen den erfassten Auflagepunkten auf der Oberfläche einen lokalen Krümmungsradius berechnet. Hierbei hängt das Messergebnis stark von der Benutzung der von Hand geführten Vorrichtung ab.

JPH06300504 A beschreibt eine Vorrichtung zur taktilen Messung der Geometrie von gebogenen Stangen mit nichtrundem Querschnitt, enthaltend zwei scheibenartigen Kontaktelemente, die durch ein drittes, mittiges Element aneinander schwingend verbunden sind, an denen das gebogene Profil definiert anliegt.

Bei all den genannten Verfahren gibt es den Nachteil, dass die Verfahren sehr teuer sind, und in der Regel nur Offline arbeiten. Das heißt, dass all diese Systeme nur zum Einstellen von Biegeprozessen genutzt werden können, nicht aber zur zeitgleichen Prozessregelung des Biegeprozesses.

Aufgabe der Erfindung ist es daher, eine Vorrichtung anzugeben, die ein schnelles und gerätetechnisch einfach durchzuführendes Vermessen von Rohren und Profilen im Offline- sowie im Online-Betrieb ermöglicht.

Die Lösung der erfindungsgemäßen Aufgabe ergibt sich hinsichtlich der Vorrichtung aus den kennzeichnenden Merkmalen des Anspruches 1 und hinsichtlich der Verwendung aus den kennzeichnenden Merkmalen des Anspruches 20 jeweils in Zusammenwirken mit den Merkmalen des zugehörigen Oberbegriffes. Weitere vorteilhafte Ausgestaltungen der Erfindung ergeben sich aus den Unteransprüchen.

Die Erfindung geht aus von einer Vorrichtung zur taktilen Erfassung und Analyse der Geometrie von gebogenen Profilen oder Rohren, aufweisend mindestens drei voneinander in Längsrichtung des Profils oder Rohrs beabstandete Kontaktelemente, die die Oberfläche des Profils oder Rohrs berühren, wobei zwei Kontaktelemente im Wesentlichen ortsfest zueinander angeordnet und eines der Kontaktelemente als Messelement relativ zu den anderen Kontaktelementen in einer Bewegungsebene verschiebbar ist, die senkrecht zur Verbindungslinie zwischen den beiden anderen Kontaktelementen ausgerichtet ist, sowie Messeinrichtungen, die die Lageänderung des verschiebbaren Messelementes erfassen. Eine derartige gattungsgemäße Vorrichtung wird dadurch weiter entwickelt, dass die Kontaktelemente einen scheibenartigen Aufbau und jeweils eine Öffnung für den Durchtritt des gebogenen Profils oder Rohrs durch die Kontaktelemente aufweisen und im Umfangsbereich der Öffnungen Führungselemente angeordnet sind, an denen das gebogene Profil oder Rohr definiert anliegt, wobei aus der Verschiebung des beweglichen Messelementes in seiner Bewegungsebene relativ zu den ortsfesten Kontaktelementen die lokale Biegung des gebogenen Profils oder Rohrs ermittelbar ist. Aufgrund der geometrischen Zuordnung der scheibenförmigen Kontaktelemente, durch die hindurch das gebogene Profil oder Rohr relativ hindurch bewegt werden kann, liegen die scheibenartig aufgebauten Kontaktelemente zu jedem Zeitpunkt an der äußeren Kontur des Profils oder Rohres an und definieren dadurch drei Punkte auf der äußeren Peripherie des Profils oder Rohrs. Aus diesen drei Punkten lässt sich die jeweils lokal vorliegende Krümmungsgeometrie des Profils oder Rohrs eindeutig bestimmen, so dass sich bei einer sukzessiven Relativverschiebung zwischen Profil oder Rohr und den Kontaktelementen sukzessive die räumliche Krümmung des Profils oder Rohrs bestimmt werden kann. Das verschiebbare Messelement verschiebt sich aufgrund der jeweils vorliegenden Biegekonfiguration des Profils oder Rohrs relativ zu den beiden ortsfesten Kontaktelementen in seiner Bewegungsebene und diese Verschiebung wird durch eine geeignete Messsensorik erfasst und kann dann über geometrische Beziehungen in einen lokalen Krümmungswert des Profils oder Rohrs umgerechnet werden. Bei der Relativbewegung zwischen Profil und Rohr bilden die beiden ortsfesten Kontaktelemente quasi die Stützpunkte, an denen das Profil oder Rohr definiert anliegt und das bewegliche Messelement wird durch die Krümmung des Profils oder Rohrs entsprechend ausgelenkt. Damit ist eine funktionsmäßig einfache und zuverlässig arbeitende Vorrichtung gegeben, die eine genaue Erfassung der dreidimensionalen Krümmung des Profils oder Rohrs ermöglicht.

In einer ersten bevorzugten Ausgestaltung sind die festen Kontaktelemente außenliegend und das verschiebbare Messelement zwischen den festen Kontaktelementen und zu diesen beabstandet, vorzugsweise mittig zwischen den festen Kontaktelementen angeordnet. Hierdurch ist eine besonders stabile Anordnung er Kontaktelemente beschrieben, da das empfindlichere bewegliche Messelement geschützt zwischen den beidseits angeordneten festen Kontaktelementen angeordnet ist. Es ist in einer anderen Ausgestaltung aber auch denkbar, dass das erste feste Kontaktelement und das verschiebbare Messelement außenliegend und das zweite feste Kontaktelement zwischen dem ersten festen Kontaktelement und dem verschiebbaren Messelement angeordnet sind.

Weiterhin ist es von Vorteil, wenn der Abstand zwischen festen Kontaktelementen und dem verschiebbaren Messelement veränderbar einstellbar ist, um die Messgenauigkeit der Vorrichtung zu verändern. Je geringer der Abstand zwischen den Kontaktelementen ist, umso genauer wird die jeweils vorliegende lokale Krümmung des gebogenen Profils oder Rohrs entlang der Längserstreckung des Profils oder Rohrs erfasst, es können bei einem kleineren Abstand zwischen den Kontaktelementen auch kleinere Krümmungsradien des Profils oder Rohrs sicher gemessen werden.

Von besonderem Vorteil ist es, dass das Profil oder Rohr entlang seiner Längsrichtung relativ zu der Anordnung der Kontaktelemente durch die Öffnungen der Kontaktelemente hindurch verschiebbar ist und aufgrund der relativen Anordnung von Kontaktelementen und Messelement jeweils die lokale Biegung des gebogenen Profils oder Rohrs bestimmbar ist. Hiermit sind nicht nur einzelne Punkte des Profils oder Rohrs vermessbar, sondern es kann bei der idealerweise kontinuierlichen Relativbewegung zwischen Kontaktelementen und Profil oder Rohr zu jedem Zeitpunkt die jeweils vorliegende Krümmung ermittelt werden. Damit erhält man eine Information über den Krümmungsverlauf über die ganze Länge des Profils oder Rohrs. Aufgrund des endlichen Abstandes zwischen den Kontaktelementen kann die Biegung des gebogenen Profils oder Rohrs als Abfolge von jeweils lokalen Durchschnittswerten für die Biegung entlang der Längsachse des Profils oder Rohrs ermittelt werden, so dass diese Mittelwerte immer eine Näherung für die jeweils lokal vorliegende Krümmung darstellen.

Von Vorteil bei der Durchführung der Krümmungsberechnung ist es, dass die Biegeebene eindeutig durch die Berührungspunkte zwischen Profil oder Rohr und den Kontaktelementen definierbar ist. Es müssen also nur rein geometrische Werte ermittelt werden, die sich aus der relativen Lage der Kontaktelemente zueinander ergeben und einfach berechnet werden können. Hierbei kann in weiterer Ausgestaltung der Profildrehwinkel aus der Veränderung der Biegeebene entlang der Längsrichtung des Profils oder Rohrs berechnet werden.

Von Vorteil im Hinblick auf die Bestimmung des Krümmungsverlaufs über die ganze Länge des Profils oder Rohrs ist es, wenn an oder benachbart zu den Kontaktelementen ein Messglied zur Bestimmung der Relativbewegung entlang der Längsrichtung zwischen dem gebogenen Profil oder Rohr und den Kontaktelementen angeordnet ist. Anhand dieses Messgliedes kann die jeweilige Relativverschiebung zwischen den Kontaktelementen und dem Profil oder Rohr genau ermittelt werden, so dass die aus der Verschiebung des verschiebbaren Messelementes bestimmbare Krümmung genau einem Punkt entlang der Länge des Profils oder Rohres zugeordnet werden kann. Neben der Ermittlung der relativen Verschiebung zwischen Kontaktelementen und dem Profil oder Rohr kann in weiterer Ausgestaltung das Messglied auch die relative Verdrehung zwischen rundem Rohr und den Kontaktelementen ermitteln. Dies kann z.B. genutzt werden, um tordierte Profile oder Rohre zu vermessen.

In einer ersten Ausgestaltung ist es denkbar, dass das Messglied berührend mit dem Profil oder Rohr wechselwirkt, vorzugsweise ein auf dem Profil oder Rohr abwälzendes Messrad oder eine Messkugel oder dgl. aufweist. Es ist aber auch denkbar, dass das Messglied ein optisches Messelement aufweist.

Neben einer reinen Verschiebung des verschiebbaren Messelementes ist es auch denkbar, dass das in seiner Bewegungsebene verschiebbare Messelement um eine Achse senkrecht zu seiner Bewegungsebene verdrehbar ist. Hierdurch können nicht nur dreidimensionale Biegekrümmungen des Profils oder Rohrs ermittelt werden, sondern es ist auch denkbar, Torsionen des Profils oder Rohres mit der selben Messeinrichtung zu bestimmen. Dies ist umso wichtiger, als bei vielen Biegeoperationen auch Torsionen des gebogenen Profils oder Rohrs, bewusst oder ungewollt, mit verursacht werden und diese Torsionen ebenfalls zur Bestimmung der Bearbeitungsqualität des Profils oder Rohres beitragen. Wenn die Kontaktelemente so gestaltet und die Messeinrichtungen neben der Verschiebung innerhalb der Bewegungsebene auch die Verdrehung des verschiebbaren Messelementes um eine Achse senkrecht zu seiner Bewegungsebene erfassen können, werden mit der gleichen Vorrichtung sowohl Biegekrümmungen als auch Biegetorsionen gleichzeitig bestimmbar. Hierbei kann in weiterer Ausgestaltung die Verdrehung des verschiebbaren Messelementes um die Achse senkrecht zu seiner Bewegungsebene der lokalen Querschnittstorsion des gebogenen Profils oder Rohrs entsprechen.

Weiterhin ist es denkbar, dass mindestens eines der ortsfesten Kontaktelemente um eine Achse senkrecht zu der Bewegungsebene des verschiebbaren Kontaktelementes verdrehbar ist, um sich an Torsionen des gebogenen Profils oder Rohrs anzupassen. Ist ein Profil oder nicht kreissymmetrisches Rohr bei dem Biegevorgang auch tordiert worden, so würde sich dieses Profil oder Rohr in dem festen Kontaktelement verklemmen können, wenn das Profil oder Rohr relativ zu den Kontaktelementen verschoben wird. Ist hingegen eines der ortsfesten Kontaktelemente verdrehbar ausgebildet, kann dieses Kontaktelemente der Torsion des Profils oder Rohrs entsprechend gedreht werden und das Profil oder Rohr wird ohne Verklemmen durch die Kontaktelemente hindurch bewegt werden können.

Hinsichtlich der Formgebung der Kontaktelemente ist es denkbar, dass die Kontaktelemente eine vieleckige, vorzugsweise eine viereckige oder dreieckige, plattenförmig berandete Grundform oder eine zumindest abschnittsweise gekrümmte Berandung aufweisen. Die Formgebung der Kontaktelemente hängt zum einen von der Form und den Querschnittsabmessungen der zu biegenden Profile oder Rohre ab und zum anderen von der Anordnung und Wirkungsrichtung der Messsensoren, die die Verlagerung des Messelementes aufgrund der Biegung und Torsion des Profils oder Rohres erfassen.

Hierzu ist es in weiterer Ausgestaltung denkbar, dass die Kontaktelemente, vorzugsweise im Bereich der Berandung angeordnete, Messflächen aufweisen, deren relative Verschiebung und/oder Verdrehung durch mit den Messflächen wechselwirkende Messsensoren geometrisch ermittelbar sind. Die Messflächen sind hierzu in ihrer relativen Lage auf dem Kontaktelement genau definierbar und damit ist auch die Lage des Profils oder Rohrs relativ zu diesen Messflächen bekannt. Mit diesen Messflächen können dann Messsensoren wechselwirken, insbesondere können die Messsensoren mechanisch, vorzugsweise taktil und/oder kontaktlos, vorzugsweise optisch und/oder elektrisch, vorzugsweise induktiv, mit den Messflächen wechselwirken, um die Verlagerung der Lage der Messflächen für die Messung der Biegung und/oder der Torsion des Profils oder Rohrs zu bestimmen. Als mechanische Messsensoren können Messtaster oder Seilzugsensoren genutzt werden, als optische Sensoren beispielsweise Laser-Triangulationssensoren oder Laserscanner oder dgl..

Hinsichtlich der Messung ist es vorteilhaft, wenn mindestens drei Messsensoren, vorzugsweise vier Messsensoren, für das Messelement vorgesehen werden, z.B. können bei der Anordnung von vier Messsensoren je zwei Messsensoren paarweise an der gleichen Kante oder dem gleichen Abschnitt der Berandung des Messelementes angeordnet sein. Dies lässt eine geometrisch einfache Berechnung der Verschiebung und ggf. Verdrehung des verschiebbaren Kontaktelementes relativ zu den ortsfesten Kontaktelementen aufgrund der Messwerte der Messsensoren zu.

In einer ersten Ausgestaltung können die Messsensoren ortsfest und orientierungsfest relativ zu der Berandung des Messelementes an der Vorrichtung angeordnet sein. Hier sind die Berührungspunkte z.B. mechanisch arbeitender Messsensoren mit den Messflächen auf dem verschiebbaren Messelement eindeutig definiert und erlauben eine einfache Umrechnung in die jeweilige Lage des verschiebbaren Messeelementes.

Es ist aber auch denkbar, dass die Messsensoren ortsfest, aber verschwenkbar relativ zu der Berandung des Messelementes an der Vorrichtung angeordnet sind. Dann muss ggf. neben der Längeninformation z.B. eines mechanischen Messtasters auch der Schwenkwinkel des Messtasters mit erfasst werden.

Von Vorteil ist es auf jeden Fall, wenn bei mechanisch arbeitenden Messsensoren zwischen den mechanischen Messsensoren und den Messflächen des Messelementes ein gleitender oder rollender Kontakt besteht, da hierdurch einerseits eine genaue Anlage der Messsensoren an den Messfläche gewährleistet ist und andererseits eine geringe Reibung zwischen Messsensor und Messfläche die Messgenauigkeit erhöht.

Von Vorteil ist es weiterhin, wenn die Messsensoren derart relativ zu dem Messelement angeordnet und ausgerichtet sind, dass die Baugröße der Vorrichtung minimiert wird. Hierzu können die Messsensoren z.B. schräg oder tangential zum Umfang der Kontaktelemente ausgerichtet sein, wodurch die Baugröße der Vorrichtung verringert wird.

In einer weiteren Ausgestaltung können die Führungselemente hinsichtlich ihrer Form und ihrer geometrischen Anordnung auf den Kontaktelementen relativ zu dem gebogenen Profil oder Rohr auf die Querschnittsgeometrie des gebogenen Profils oder Rohrs angepasst sein. Um eine definierte Anlage der Kontaktelemente an dem Profil oder Rohr zu gewährleisten, die zur genauen Erfassung der Biegung und ggf. Torsion des Profils oder Rohrs erforderlich ist, sollten die Führungselemente passend zu den Querschnittsabmessungen des Profils oder Rohr eingestellt werden, Hierzu können die Führungselemente Gleitelemente oder bewegliche, vorzugsweise rollende Lagerelemente aufweisen, an denen das gebogene Profil oder Rohr vorbeiführbar ist. Durch entsprechende Positionierung der Führungselemente auf oder an den Kontaktelementen ist dann eine geometrisch genaue Zuordnung zwischen Führungselementen/Kontaktelementen und Profil oder Rohr möglich.

Hierbei können in weiterer Ausgestaltung die Führungselemente auch austauschbare und hinsichtlich ihrer geometrischen Anordnung auf den Kontaktelementen flexibel positionierbare Gleitelemente oder Lagerelemente aufweisen, so dass die gleichen Führungselemente in geometrisch geänderter Anordnung für verschiedene Querschnittsformen und Querschnittsabmessungen des Profils oder Rohrs nutzbar sind.

In einer anderen Ausgestaltung ist es aber auch denkbar, dass die Führungselemente eine Vielzahl relativ zu dem gebogenen Profil oder Rohr verstellbare Stößel aufweisen, die jeweils punktuell an dem gebogenen Profil oder Rohr anliegen. Hier werden nicht die Führungselemente ausgetauscht oder umgebaut, sondern die einzelnen Stößel verändern ihre Lage relativ zu den Kontaktelementen derart, dass sie jeweils punktuell an der Peripherie des Profils oder Rohrs anliegen, aber nach entsprechender Umstellung auch andere Querschnittsformen und Querschnittsabmessungen des Profils oder Rohr sicher abstützen können.

Auch ist es denkbar, dass die Führungselemente selbst Profilierungen aufweisen, die auf die Querschnittsgeometrie des gebogenen Profils oder Rohrs angepasst sind. So kann z.B. ein rundes Rohr direkt über die Profilierungen der Führungselemente sicher und geometrisch definiert durch die Kontaktelemente hindurch bewegt werden, wenn die Führungselemente z.B. eine entsprechende runde Profilform aufweisen.

Weiterhin ist es von Vorteil, wenn zumindest einzelne der Führungselemente nachgiebig gelagert sind, um bei der Bewegung des gebogenen Profils oder Rohrs durch die Kontaktelemente ein Verklemmen des gebogenen Profils oder Rohrs zu verhindern. Dies ist dadurch erforderlich, dass sich aufgrund der Biegekrümmung des Profils oder Rohrs zwischen z.B. einander gegenüberliegenden Punkten auf dem Umfang des Profils oder Rohres zwischen den Berührungspunkten mit den festen Kontaktelementen größere Abstände einstellen, die zu einem Verklemmen des Profils oder Rohrs bei der Relativbewegung durch die Kontaktelemente führen würden. Um dieses Verklemmen zu verhindern, wird z.B. mindestens eines von zwei im Wesentlichen gegenüberliegend angeordneten Führungselementen nachgiebig gelagert und kann daher ein wenig nachgeben und das Profil oder Rohr bei der Krümmungsermittlung passieren lassen.

Von Vorteil ist es weiterhin, wenn die Vorrichtung im Bereich des Auslaufs einer Biegemaschine angeordnet ist und die ermittelten Messwerte der Vorrichtung direkt zur Beeinflussung der Arbeitsweise der Biegemaschine, insbesondere zur geometrischen Ausführung der Biegebearbeitung genutzt wird. Hierdurch kann der Ablauf der Biegebearbeitung nachfolgender Profile oder Rohre direkt online aufgrund des Messergebnisses des gerade vermessenen Profils oder Rohrs korrigiert und die Genauigkeit der Biegebearbeitung deutlich verbessert werden.

Hierzu kann in weiterer Ausgestaltung die Vorrichtung gewichtsentlastet und/oder verdrehbar im Bereich des Auslaufs einer Biegemaschine aufgehängt sein, um die korrekte geometrische Zuordnung von Vorrichtung und Biegemaschine und Vorrichtung auch bei unterschiedlichen Biegebearbeitungen und Biegekonfigurationen der gebogenen Profile oder Rohre einfach herstellen zu können.

In einer anderen Ausgestaltung ist es aber auch denkbar, dass die Vorrichtung zur Ermittlung von Prozessparametern des Biegeprozesses oder der Biegemaschine und/oder von Werkstoffparametern des Profils oder Rohres genutzt wird, indem die Biegung mindestens eines vorab probehalber gebogenen Profils oder Rohrs gemessen und ausgewertet wird. So kann z.B. anhand der gemessenen Biegung des vorab probehalber gebogenen Profils oder Rohrs eine Biegemomenten/Biegekrümmungskurve oder eine Fließkurve oder eine Spannungs-/Dehnungskurve aufgestellt werden. Von Vorteil hierbei ist, dass man bei der Optimierung des Biegeprozesses nicht nur auf die von Hersteller des Profils oder Rohres gelieferten Materialkennwerte z.B. im Hinblick auf zu erwarten Rückfederungen angewiesen ist, sondern die tatsächlichen Materialkennwerte anhand der Probebiegung überprüfen oder erfassen kann. Zudem lassen sich dadurch Maschinenparameter, wie z.B. die mechanische Nachgiebigkeit einzelner Maschinenkomponenten erfassen und ggf. anschließend auch kompensieren.

Die Vorrichtung eignet sich zum Vermessen von Rohren und Profilen und somit zur Bestimmung deren Geometrie. Es können Koordinaten, Krümmungen, die Biegelinienrotation sowie die Querschnittstorsion bestimmt werden. Diese Daten lassen sich nutzen, um Biegeprozesse einzustellen bzw. zu regeln oder auch um digitale Abbilder der gebogenen Bauteile zu erstellen. Die Möglichkeit der Einstellung und Regelung ist besonders relevant für Nutzer von kinematischen Biegemaschinen, welche mit schwankenden Materialeigenschaften und geometrischen Parametern über der Längsachse von Profilen zu kämpfen haben, die sich direkt auswirkt als schwankende Rückfederung und somit Konturungenauigkeiten.

Eine besonders bevorzugte Ausführungsform der erfindungsgemäßen Vorrichtung zeigt die Zeichnung.

Es zeigen:

Figur 1        - eine prinziphafte Darstellung einer Anordnung von drei Kontaktelementen entlang der Biegelinie eines gebogenen Profils oder Rohrs zur Messung der Biegekonfiguration des gebogenen Profils oder Rohrs,

Figur 2        - grundsätzliche geometrische Beziehungen bei der Messung der Biegekonfiguration des gebogenen Profils oder Rohrs,

Figur 3a, 3b        - Draufsicht auf ein rechteckiges oder dreieckiges Kontaktelement mit darin angeordnetem tordiertem Profil oder Rohr

Figur 4a-4d        - Beispiele für Anordnungsmöglichkeiten und Lagerungsmöglichkeiten von Messsensoren an dem verschiebbaren Kontaktelement mit Kontakt am Außenumfang des Kontaktelementes,

Figur 5a-5d        - Beispiele für Anordnungsmöglichkeiten und Lagerungsmöglichkeiten von Messsensoren an dem verschiebbaren Kontaktelement mit Kontakt an konsolenartigen Messflächen des Kontaktelementes,

Figur 6        - Beispiele für verschiedene gerätetechnische Ausgestaltungen der Messsensoren,

Figur 7        - nachgiebige Lagerung zumindest einzelner Führungselemente zur Vermeidung eines Klemmens des Profils oder Rohrs,

Figur 8        - Beispiele zur Ausgestaltung von Führungselementen abhängig von verschiedenen Querschnittsformen des Profils oder Rohrs,

Figur 9        - eine andere Ausgestaltung von stößelartigen Führungselementen anpassbar an verschiedene Querschnittsformen des Profils oder Rohrs,

Figur 10        - Sensorelement zur Erfassung der Verschiebung des Profils oder Rohres entlang seiner Längserstreckung,

Figur 11        - Grundsätzliche Zusammenhänge bei der Ermittlung einer korrigierten Biegemomenten-Krümmungskurve anhand von einer Probebiegung und Materialkennwerten,

Figur 12        - Zusammenhänge bei der Ermittlung einer korrigierten Biegemomenten-Krümmungskurve anhand von zwei oder mehreren Probebiegungen mit unterschiedlichen Krümmungen.

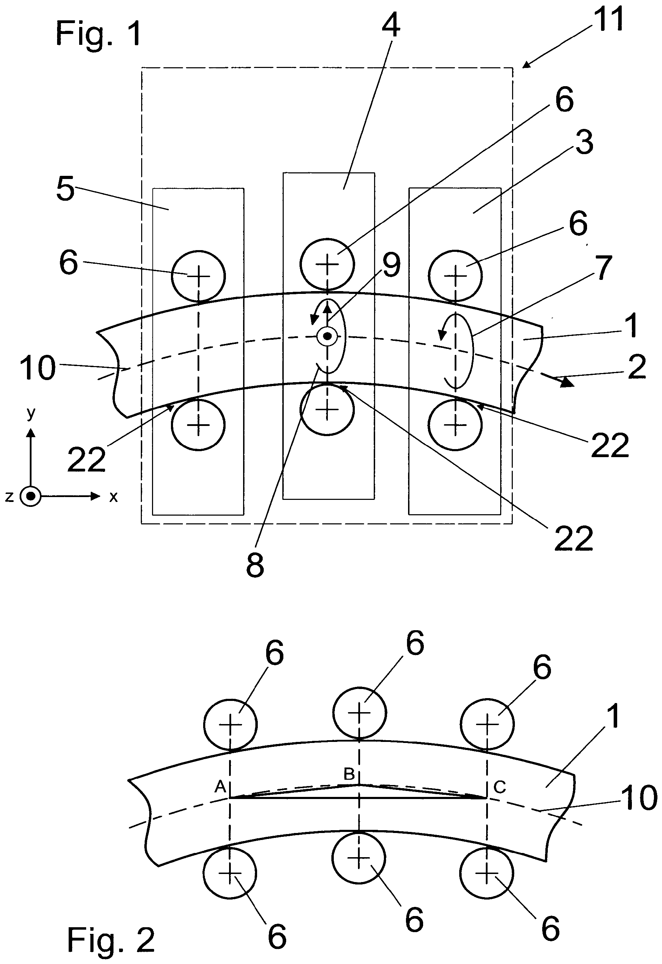

In der Figur 1 ist eine prinziphafte Darstellung einer Anordnung von drei Kontaktelementen 3, 4, 5 entlang der Biegelinie 10 eines gebogenen Profils 1 oder Rohrs zur Messung der Biegekonfiguration des gebogenen Profils 1 oder Rohrs dargestellt. Die Vorrichtung 11 zur Messung der Biegung eines gebogenen Profils 1 oder Rohrs besteht zunächst aus zwei festen Kontaktelementen 3, 5 jeweils mit Öffnungen 22. Kontaktelement 5 ist fest mit einem Gehäuse 11 der Vorrichtung verbunden. Kontaktelement 3 ist in x-, y- und z-Richtung in dem Gehäuse 11 fixiert und erlaubt ausschließlich eine Drehbewegung 7 um die x-Achse. Die Positionierung auf dem Profil 1 erfolgt durch Führungselemente 6, die je nach Querschnitt des Profils 1 an das Profil 1 angepasst werden und im Bereich der Öffnungen 22 angeordnet sind. Die Führungselemente 6 ermöglichen eine definierte Führung der Kontaktelemente 3, 4, 5 entlang des Profils 1, wozu das Profil 1 oder Rohr durch die Öffnungen 22 bewegt wird. Der Freiheitsgrad des Kontaktelementes 3 (Drehung um die x-Achse) ermöglicht das Führen der Vorrichtung nicht nur entlang ebener oder räumlich gebogener Profile 1, sondern auch entlang tordierter Profile 1. Hierfür wird die Vorrichtung relativ zu den Kontaktelementen 3, 4, 5 mit einer nicht dargestellten Bewegungseinrichtung in Vorschubrichtung 2 bewegt, so dass die Kontaktelemente 3, 4, 5 sukzessive die ganze Länge des gebogenen Profils 1 oder Rohrs abfahren. Dabei kann in festlegbaren Abständen oder auch zyklisch die relative Lage des verschiebbaren Kontaktelementes 4 relativ zu den festen Kontaktelementen 3, 5 ermittelt werden, wie dies in der Figur 2 näher dargestellt ist.

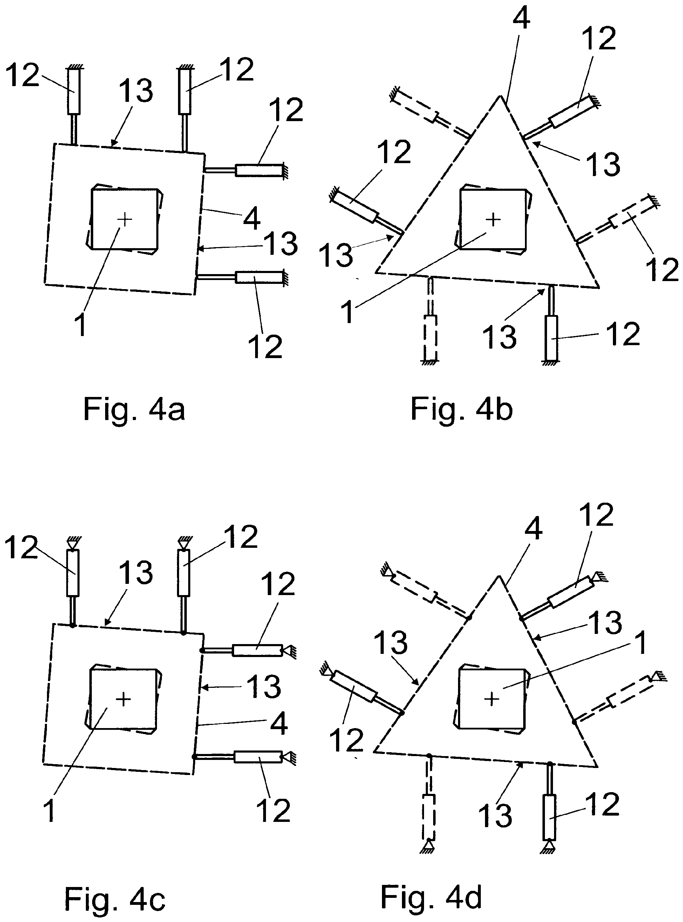

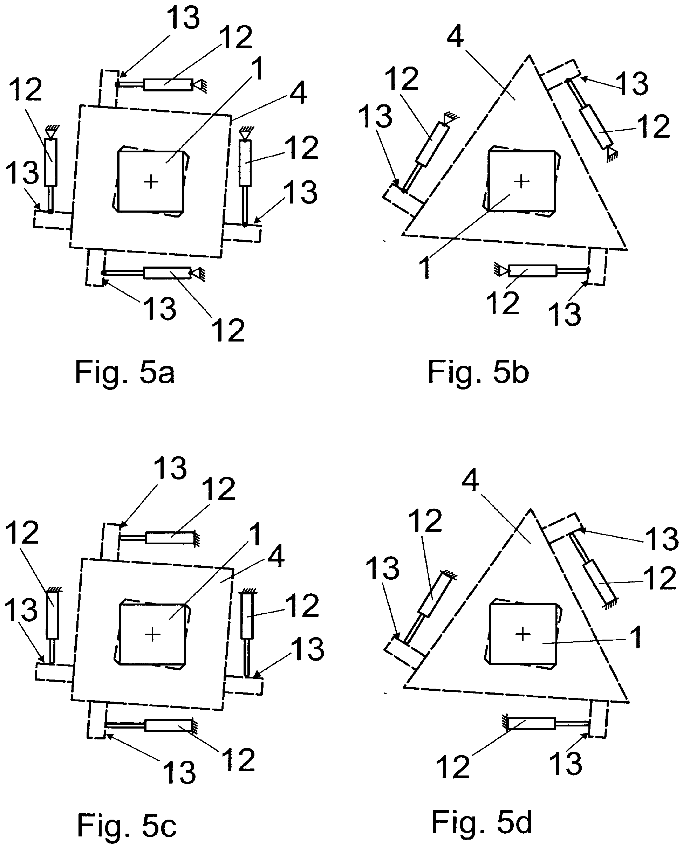

Das in der Mitte, zwischen Kontaktelement 3 und Kontaktelement 5, gelagerte verschiebbare Kontaktelement oder Messelement 4 ist dafür in x-Richtung fixiert und frei verschiebbar in y- und z-Richtung 9 gelagert. Zudem ist die Drehung 8 des Messelementes 4 um die x-Achse frei möglich. Wird ein räumlich gekrümmtes Profil 1 durch die Kontaktelemente 3, 4, 5 geschoben, bewegt sich einzig das Messelement 4 in y- und z-Richtung. Die beiden Kontaktelement 3, 5 verbleiben an ihren Ursprungskoordinaten relativ zum Gehäuse 11. Hierdurch wird es ermöglicht, die Krümmung einfach aus den drei Punkten A, B und C zu berechnen (siehe Figur 2). Die Ebene, die sich aus den Punkten A, B und C ergibt, definiert die Biegeebene. Die Änderung dieser Biegeebene relativ zum Profilvorschub 2 definiert wiederum den Profildrehwinkel. Um die Verschiebung des verschiebbaren Messelementes 4 zu messen, sind in den Figuren 4 und 5 noch näher erläuterte Messsensoren 12 an dem Messelement 4 angeordnet.

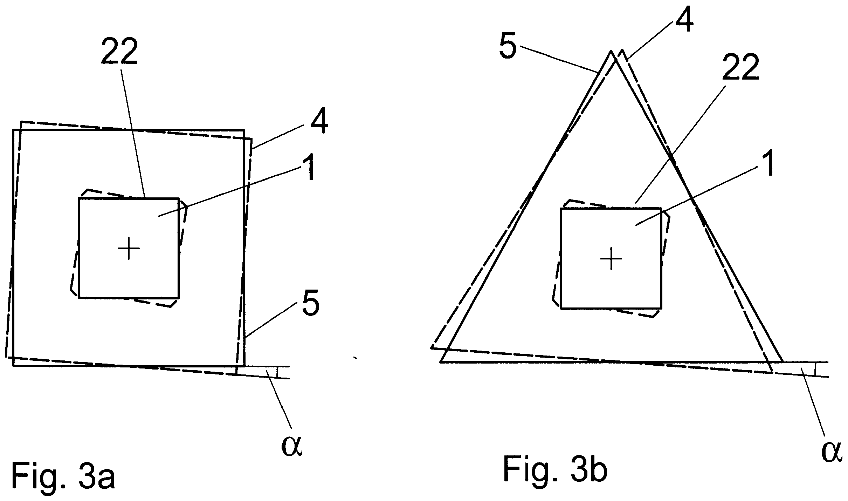

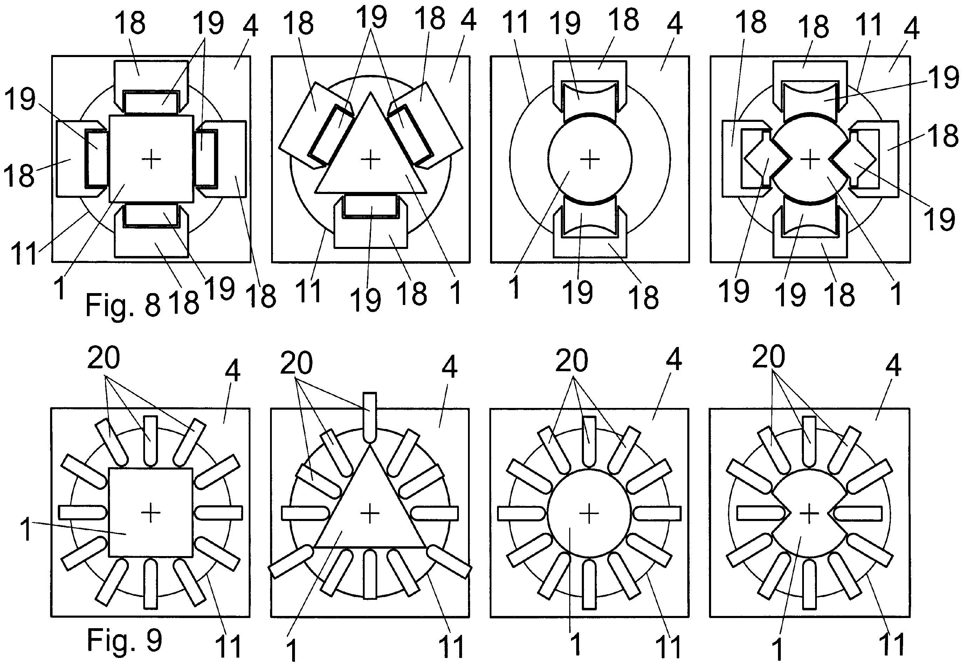

Um die Torsion des Querschnitts des Profils 1 oder Rohrs zu messen, wird die Drehung des Messelementes 4 relativ zu dem feststehenden Kontaktelement 5 bestimmt, wie dies in Figur 3a bzw. Figur 3b angedeutet ist. Eine solche Torsion des Profils 1 oder Rohrs entsteht beabsichtigt oder unbeabsichtigt aufgrund von Schubkräften in dem Profil 1 oder Rohr beim Biegen und führt zu einer in der Regel räumlichen Drehung entlang der Biegelinie 10 des Profils 1 oder Rohrs, die ebenfalls erfasst werden soll. Diese Drehung ist gleich dem lokalen Querschnittstorsionswinkel $\alpha$. Die Außengeometrie der Kontaktelemente 3, 4, 5 kann wie in Figur 3b dreieckig, wie in Figur 3a viereckig, n-eckig sein, oder auch splineförmig sein. Die Größe und die Form der Öffnung 22 ist an den jeweiligen Querschnitt des Profils 1 oder Rohrs anpassbar, wobei die genaue Anpassung durch die Führungselemente 6 erfolgt, wie dies noch detaillierter in Figur 8 und 9 zu erkennen ist.

Aufgrund der Beweglichkeit des verschiebbaren Messelementes 4 relativ zu den festen Kontaktelementen 3, 5 wird sich bei Vorliegen einer Krümmung zwischen den Kontaktpunkten A und C das verschiebbare Messelement 4 relativ verschieben und verdrehen, wie dies in den Figuren 3a und 3b zu erkennen ist. Die Messung dieser Verschiebung und Verdrehung erfolgt dabei über Messsensoren 12, 14, 15 oder 16, die in den Figuren 4, 5 und 6 noch näher erkennbar und hierzu erläutert sind. Aus den Messwerten dieser Messsensoren 12, 14, 15 oder 16 lassen sich dann anhand geometrischer Beziehungen die relative Verschiebung 9 des Messelementes 4 in Richtung der y-Achse und der z-Achse und die Verdrehung 8 um den Torsionswinkel $\alpha$ berechnen. Um eine definierte Wechselwirkung der Messsensoren 12, 14, 15 oder 16 mit dem Messelement 4 zu gewährleisten, sind an dem Messelement 4 Messflächen 13 angeordnet, die zur Wechselwirkung mit den Messsensoren 12, 14, 15 oder 16 dienen. Im einfachsten Fall der Anbringung mechanischer Messsensoren 12 in Form von z.B. Messtastern sind diese Messflächen 13 entweder Abschnitte auf dem Umfang des Messelementes 4 (Figur 4) oder konsolenartig von dem Messelement 4 abstehende Vorsprünge (Figur 5), deren Messflächen 13 genau definiert bearbeitet sind und deren genaue Lage zueinander auf dem Messelement 4 bekannt ist.

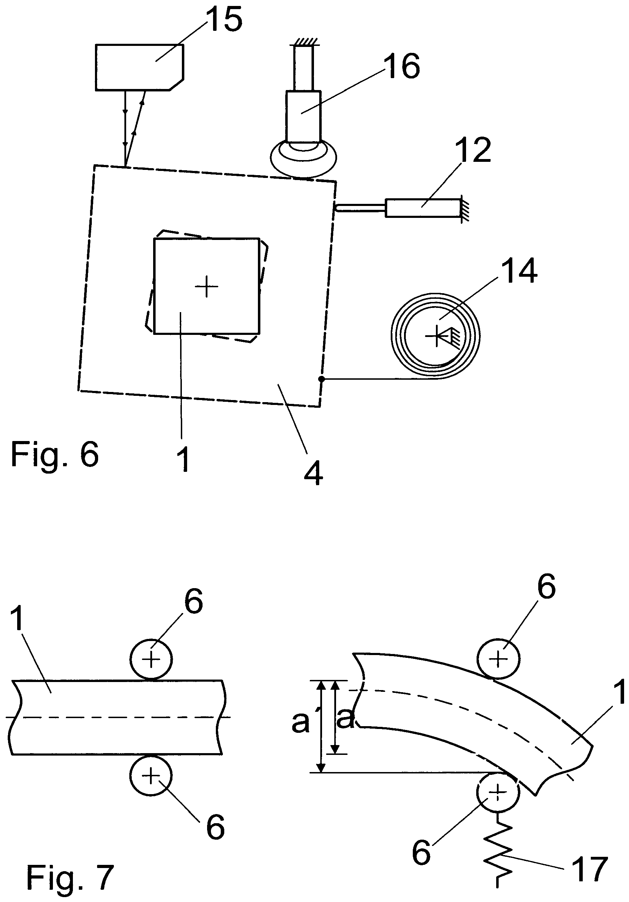

Für die Messbarkeit der Verschiebung und Verdrehung des Messelementes 4 müssen die Messflächen 13 für die Messsensoren 12 so parametrisch abzubilden sein, dass für eine Kombination von Abstandsmessergebnissen die Lage des Messelementes 4 eindeutig bestimmt ist. Die Messflächen 13 können entweder an der Außenkontur des Messelementes 4 sein oder an Funktionsflächen innerhalb des Messelementes 4. Um ein eindeutiges Ergebnis zu erhalten sind mindestens drei Messsensoren 12 (Figuren 4b, 4d, 5b, 5d) notwendig. Zum Erhöhen der Messgenauigkeit können jedoch auch mehr Messsensoren 12 eingesetzt werden (Figuren 4a, 4c, 5a, 5c). Optimal ist die Verwendung von Messsensoren 12, wobei jeweils 2 auf einer Seite des Messelementes 4 (Figuren 4a, 4c, 5a, 5c) angeordnet sind, da die Messergebnisse dieser Paare von Messsensoren 12 direkt Geraden beschreiben, die der Geometrie des Messelementes 4 leicht zuzuordnen sind. Die Messsensoren 12 können entweder im Gehäuse starr fixiert sein (siehe Figuren 4a, 4b, 5c, 5d) und einen gleitenden Messbereich auf den Messflächen 13 aufweisen bzw. einen gleitenden oder rollenden Kontakt. Die Messsensoren 12 können aber auch im Gehäuse 11 und an dem Messelement 4 schwenkbar fixiert sein (siehe Figuren 4c, 4d, 5a, 5b). Figur 5 zeigt weitere Bauformen der Geometrie des Messelementes 4 und der Anordnung der Messsensoren 12 an dem Messelement 4, die genutzt werden können, um eine kompakte Bauform der Vorrichtung realisieren zu können. Als Abstandsmesser können taktile Sensoren 12 eingesetzt werden wie z.B. Messtaster und Seilzugsensoren. Es können aber auch optische Sensoren wie Laser-Triangulationssensoren 15 und Laserscanner verwendet werden wie auch induktive Abstandssensoren 16 (siehe Figur 6).

Beim Durchlaufen eines gebogenen Profils 1 durch die Kontaktelemente 3, 4, 5 kommt es zu einem Vergrößern des Abstands a zwischen oberen und unteren Führungselementen 6 im Vergleich zum Durchlauf eines ungebogenen Profils 1 (siehe Figur 7). Dieser Abstand a' muss durch Federelemente 17 überbrückt werden oder durch elastische Rollen/Gleiter. Jeweils eines der gegenüberliegenden Führungselemente 6 muss gefedert sein.

Um eine möglichst hohe Flexibilität zu erreichen, muss die Vorrichtung und damit auch die Anordnung der Kontaktelemente 3, 4, 5 auf eine möglichst große Anzahl von Querschnitten des Profils 1 oder Rohrs adaptierbar sein und gleichzeitig eine geometrisch sichere Führung des Profils 1 oder Rohrs gewährleisten. Die erste Möglichkeit (Figur 8) besteht in der Nutzung von flexibel positionierbaren und austauschbaren Führungsrollen 19 bzw. Führungsgleitern an den Führungselementen 6, 18. In diesem Fall sind die Führungsrollen/Führungsgleiter 19 in hierfür individuell einstellbaren, nicht weiter dargestellten Halterungen angebracht, die radial sowie über den Umfang der Öffnung 22 verstellt werden können. Die Anzahl und Positionierung der Führungsrollen/Führungsgleiter 19 richtet sich nach dem zu vermessenden Querschnitt des Profils 1 oder Rohrs. Für ein Dreiecksprofil sind beispielsweise drei Führungsrollen/Führungsgleiter 19 pro Kontaktelement 3, 4, 5 notwendig. Für ein Vierkantprofil sind vier Führungsrollen/Führungsgleiter 19 notwendig. Für Rundprofile können 2 oder mehrere Führungsrollen/Führungsgleiter 19 eingesetzt werden. Bei der Verwendung von zwei Führungsrollen/Führungsgleitern 19 müssen die Führungsrollen/Führungsgleiter 19 allerdings profiliert sein, das heißt, den Durchmesser des Rohrs 1 abbilden (siehe Figur 8).

Die zweite Möglichkeit (Figur 9) ist die Nutzung einer Vielzahl an Stößeln 20, welche durch die passende Zustellung den Querschnitt des Profils 1 oder Rohrs wiedergeben ähnlich wie bei einem Nagelbrett. Der Grad der Querschnittsdiskretisierung hängt hierbei unmittelbar mit der Anzahl der verwendeten Stößel 20 zusammen. Die in Kontakt mit dem Profil 1 oder Rohr tretenden Elemente der Stößel 20 können entweder mit dem Profil 1 in Reibkontakt stehen oder in Rollkontakt, beispielsweise durch den Einsatz von Kugeln in den Spitzen der Stößel 20.

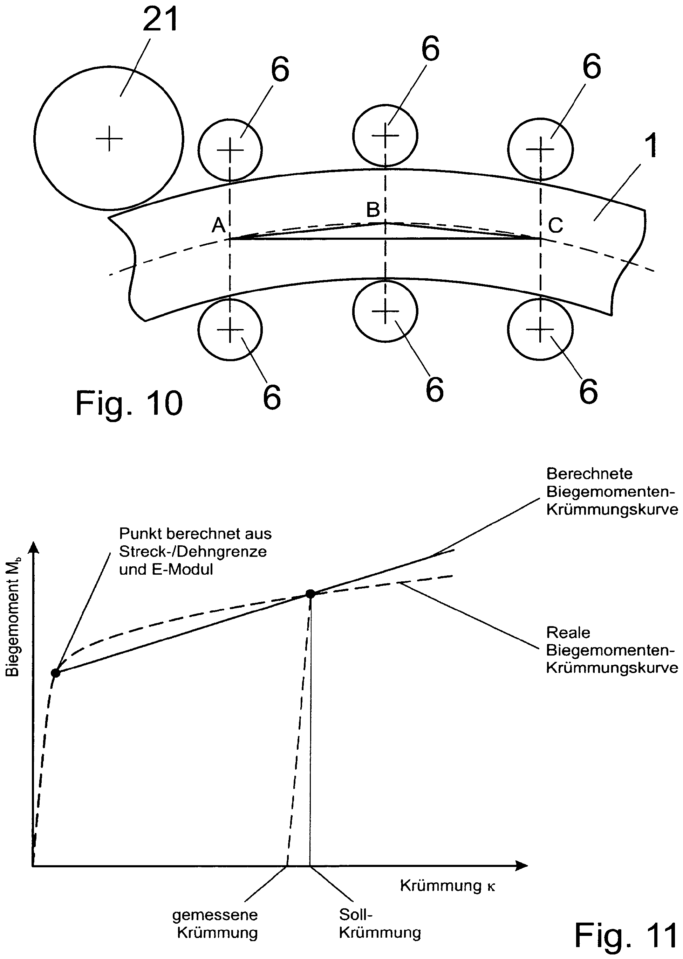

Um die Lage Kontaktelemente 3, 4, 5 in ihrer Position entlang des Profils 1 oder Rohrs (Figur 10) zu bestimmen, muss ein entsprechendes Messglied 21 vorgesehen werden. Dies kann entweder kontaktlos oder taktil realisiert werden. Kontaktlos kann Bildkorrelation verwendet werden, ähnlich wie bei einer optischen Maus. Taktil kann ein Drehgeber 21 inklusive Messrad verwendet werden. Sollen Rohre 1 mit kreisförmigem Querschnitt vermessen werden, kann das Messglied 21 nicht in einer definierten Querschnittslage an dem Profil 1 entlanggeführt werden, da der kreisförmige Querschnitt des Rohres 1 keine definierte Führung erlaubt. Die Drehung der Vorrichtung um das Rohr 1 ist frei. Um dennoch genaue Daten liefern zu können, muss diese freie Drehung um das Rohr 1 gemessen werden. Hierzu kann ebenso entweder ein taktiler oder optischer, nicht weiter dargestellter Sensor verwendet werden. Die gemessene freie Drehung kann wiederum genutzt werden, um eine Fehlerkorrektur bei der Biegeebenenbestimmung zu ermöglichen.

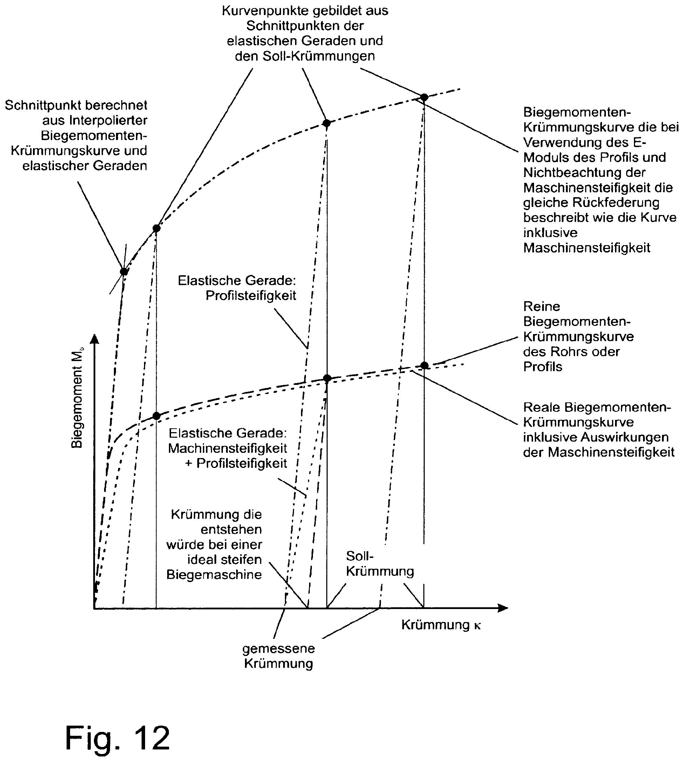

Die Vorrichtung kann ebenfalls zur Ermittlung von Prozessparametern des Biegeprozesses oder der Biegemaschine und/oder von Werkstoffparametern des Profils 1 oder Rohres genutzt werden, indem die Biegung mindestens eines vorab probehalber gebogenen Profils 1 oder Rohrs gemessen und ausgewertet wird. So kann z.B. anhand der gemessenen Biegung des vorab probehalber gebogenen Profils 1 oder Rohrs eine Biegemomenten/Biegekrümmungskurve oder eine Fließkurve oder eine Spannungs-/Dehnungskurve aufgestellt werden. Von Vorteil hierbei ist, dass man bei der Optimierung des Biegeprozesses nicht nur auf die von Hersteller des Profils 1 oder Rohres gelieferten Materialkennwerte z.B. im Hinblick auf zu erwarten Rückfederungen angewiesen ist, sondern die tatsächlichen Materialkennwerte anhand der Probebiegung überprüfen oder erfassen kann. Zudem lassen sich dadurch Maschinenparameter, wie z.B. die mechanische Nachgiebigkeit einzelner Maschinenkomponenten erfassen und ggf. anschließend auch kompensieren. Die grundlegenden Zusammenhänge sind hierbei in den Figuren 11 und 12 dargestellt.

Kersten (Kersten, Sebastian. Prozessmodelle zum Drei-Rollen-Schubbiegen von Rohrprofilen, Dissertation, Universität Siegen, 2013) beschreibt in seiner Dissertation die Methode, mittels des Drei-Rollen-Schubbiegen zwei Radien zu biegen und über das Verhältnis der eingestellten Radien zu den resultierenden Radien die Maschineneinstellung zu optimieren. Der Wert des eingestellten Radius wird hierbei durch ein idealisiertes geometrisches Modell der Biegemaschine bestimmt und weicht grundsätzlich, aufgrund von Rückfederung und Maschinensteifigkeit, sowie der Vernachlässigung von plastischen und elastischen Anteilen im Profil 1 von der realen Geometrie ab. Zur vereinfachten Darstellung zeigt Kersten diese Beziehung in einem Diagramm, wobei die resultierenden Radien auf der y-Achse aufgetragen sind und die eingestellten Radien auf der x-Achse. Zwischen den zwei Radien wird ein linearer Zusammenhang angenommen, welcher auch unter beziehungsweise über diese beiden Radien hinaus extrapoliert werden kann. Die Optimierung der Maschineneinstellung funktioniert so, dass der zu biegende Soll-Radius mit dem Wert des resultierenden Radius gleichgesetzt wird und über das Verhältnis $^{eingestellter\ Radius}/_{resultierender\ Radius}$ der Wert des einzustellenden Radius' bestimmt wird. Die Maschineneinstellungen werden über das bereits beschriebene idealisierte geometrische Modell der Maschine bestimmt. Die Einschränkung bei diesem Verfahren ist zunächst, dass es sich ausschließlich auf das 3-Rollen-Schubbiegen beschränkt. Darüber hinaus kann ausschließlich der Bereich des konstanten Radius eingestellt werden. Beim Anbiegen entstehen deshalb Abweichungen, die Kersten durch einen mehrstufigen Korrekturprozess ausgleicht, wobei in seinen Untersuchungen ein zusätzlicher Korrekturschritt ausgereicht hat.

Mit der erfindungsgemäßen Vorrichtung können Prozessparameter für jegliche Biegeprozesse generiert werden, wobei die Maschinensteuerung der Biegemaschine zur Generierung der Achsbewegungen eine Biegemomenten-Krümmungskurve bzw. eine Fließkurve oder Spannungs-Dehnungskurve nutzt. Dies bezieht ebenfalls Verfahren mit ein, die mit einzelnen Punkten in diesen Diagrammen arbeiten und Materialdaten, beispielsweise: Streckgrenze bzw. Dehngrenze, Zugfestigkeit, E-Modul, G-Modul, Gleichmaßdehnung, Bruchdehnung benutzen.

Die Funktionsweise der Ermittlung ist dabei wie folgt:

Es sollen Radien bzw. Krümmungen (Krümmung = $^{1}/_{Radius}$) mittels eines Biegeverfahrens produziert werden, für welches die Prozessparameter erzeugt werden sollen. Es muss mindestens eine Krümmung eines Profils 1 vorab gebogen und vermessen werden. Die Genauigkeit der Prozessparameter steigt jedoch mit der Anzahl der erzeugten und vermessenen Krümmungen, sodass die Verwendung von 2 oder mehreren Probebiegungen und der dabei erzeugten Krümmungen vorzuziehen ist. Wichtig ist, dass nur der Bereich der konstanten Biegung ausgewertet wird, in welchem eine nahezu konstante Krümmung herrscht. Anders als in dem von Kersten vorgestellten Verfahren soll der Anbiege- und Enlastungsbereich nicht mit in den Vergleich Soll-/Ist-Krümmung aufgenommen werden. Die Genauigkeit dieser Bereiche wird durch die Erstellung der Prozessparameterkurven bzw. Prozessdaten gewährleistet und die Verwendung dieser Kurven und Daten bei der Generierung der Biegeachsdaten.

Wird nur eine Probebiegung erzeugt und vermessen, muss zusätzlich auf grundlegende Parameter des Rohr- oder Profilmaterials zurückgegriffen werden. Notwendig sind hierbei die Streckgrenze bzw. Dehngrenze und der E-Modul, welche entweder vom Lieferanten bei der Materiallieferung zur Verfügung gestellt werden oder aus der Literatur entnommen werden können. Bei der Verwendung von nur einer Probebiegung sollte diese in der Mitte des zu biegenden Krümmungsbereichs liegen. Da die Streckgrenze das Ende des elastischen Bereichs kennzeichnet, kann für die Berechnung des an diesem Punkt herrschenden Biegemoments die allgemein bekannte Formel:

$$\sigma_b = \frac{M_b}{W} = \frac{M_b \cdot e}{I}$$

verwendet werden, wobei $\sigma_b$ die Biegespannung oder Längsspannung im Rohr oder Profil an der Randfaser ist - in diesem Fall wird die Streckgrenze oder Dehngrenze eingesetzt, $M_b$ das Biegemoment, W das Widerstandsmoment des Rohr- oder Profils, welches weiter in dessen Flächenträgheitsmoment I sowie den maximalen Randfaserabstand e aufgelöst werden kann.

Die Krümmung an dem Punkt der Streck- bzw. Dehngrenze kann wie folgt berechnet werden:

$$\kappa = \frac{M_b}{EI}$$

Bei mindestens 2 erzeugten und vermessenen Probebiegungen muss nicht zusätzlich auf grundlegende Parameter des Rohr- oder Profilmaterials zurückgegriffen werden, um direkt einen spezifischen Punkt des Diagramms zu berechnen. Es sollte jedoch mindestens der E-Modul des Materials oder einer dem des Materials naheliegender E-Modul verwendet werden, um die elastische Gerade zu berechnen. Auch wird die Genauigkeit erheblich erhöht, gerade bei hoher Maschinensteifigkeit. Bei hoher Maschinensteifigkeit ist die reale Steigung der elastischen Gerade geringer. Da bei reiner Betrachtung der Soll-Krümmung und der gemessenen Krümmung nicht bekannt ist, wie viel geringer die Gerade durch den zusätzlichen Steifigkeitseinfluss ist, muss die Gerade unter Verwendung des E-Moduls angenähert werden. Die Gerade bildet sich aus dem E-Modul multipliziert mit dem Flächenträgheitsmoment des Profils:

$$\frac{M_b}{\kappa} = EI$$

Die erhöhte Rückfederung hervorgerufen durch die Maschinensteifigkeit und Profileinspannung wird durch höhere berechnete scheinbare Biegemomente kompensiert und eine höhere scheinbare Verfestigung des Materials. Die Biegemomentenkurvenpunkte werden gebildet aus den Schnittpunkten der elastischen Geraden, welche jeweils durch die gemessenen Krümmungen laufen, und die Vertikalen, welche durch die dazugehörigen Soll-Krümmungen laufen. Der Übergangspunkt vom elastischen in den plastischen Bereich wird durch den Schnittpunkt der elastischen Geraden, welche durch den Ursprung verläuft, und die interpolierte/extrapolierte Biegemomenten-Krümmungskurve gebildet.

Mit der Formel:

$$M_b = \int \sigma(y) \cdot y \cdot dA$$

kann die von der Profilquerschnittslage unabhängige Spannungs-Dehnungskurve und wiederum die Fließkurve ermittelt werden. $y$ bezeichnet hierbei die Distanz zwischen der Biegelinie bzw. neutralen Faser des Profils und eines Segments mit der Fläche dA des Profils senkrecht zur Biegeebene. $\sigma(y)$ bezeichnet die auf dieses Segment wirkende Spannung.

Entsprechend der oben genannten Vorgehensweise zur Ermittlung der Biegemomenten-Krümmungskurve kann ebenso die Torsionsmomenten-Verzerrungskurve bestimmt werden. Um das Torsionsmoment ($M_T$) am Ende des elastischen Bereichs zu bestimmen, wird der G-Modul verwendet und die Formel:

$$\tau = \frac{M_T}{I_T} \cdot r$$

$I_T$ bezeichnet das polare Flächenträgheitsmoment und r den Querschnittsradius. Um die Verzerrung $\gamma$ zu berechnen wird die Formel:

$$\gamma = \frac{r}{L} \cdot \phi \quad \text{wobei} \quad \phi = \frac{M_T \cdot L}{G \cdot I_T}$$

verwendet. L ist hierbei die Länge des tordierten Profils und $\Phi$ der Torsionswinkel.

## Sachnummernliste

1     - Profil oder Rohr

2     - Vorschubrichtung

3     - festes Kontaktelement

4     - verschiebbares Messelement

5     - festes Kontaktelement

6     - Führungselement

7     - Verdrehrichtung festes Kontaktelement

8     - Verdrehrichtung verschiebbares Kontaktelement

9     - Verschiebung verschiebbares Kontaktelement

10    - Biegelinie

11    - Gehäuse der Vorrichtung

12    - mechanischer Messsensor

13    - Messfläche

14    - Seilzugsensor

15    - Triangulationssensor

16    - induktiver Sensor

17    - Federelement

18    - Führungselement

19    - Lagerelement

20    - Stößel

21    - Messglied

22    - Öffnung

$\alpha$    - Torsionswinkel

## Patentansprüche

1.  Vorrichtung zur taktilen Erfassung und Analyse der Geometrie von gebogenen Profilen (1) oder Rohren, aufweisend mindestens drei voneinander in Längsrichtung des Profils (1) oder Rohrs beabstandete Kontaktelemente (3, 4, 5), die die Oberfläche des Profils (1) oder Rohrs berühren, wobei zwei Kontaktelemente (3, 5) im Wesentlichen ortsfest zueinander angeordnet und eines der Kontaktelemente (4) als Messelement (4) relativ zu den anderen Kontaktelementen (3, 5) in einer Bewegungsebene (9) verschiebbar ist, die senkrecht zur Verbindungslinie zwischen den beiden anderen Kontaktelementen (3, 5) ausgerichtet ist, sowie Messeinrichtungen (12, 14, 15, 16), die die Lageänderung des verschiebbaren Messelementes (4) erfassen,
    **dadurch gekennzeichnet, dass**
    die Kontaktelemente (3, 4, 5) einen scheibenartigen Aufbau und jeweils eine Öffnung (22) für den Durchtritt des gebogenen Profils (1) oder Rohrs durch die Kontaktelemente (3, 4, 5) aufweisen und im Umfangsbereich der Öffnungen (22) Führungselemente (6, 18, 19) angeordnet sind, an denen das gebogene Profil (1) oder Rohr definiert anliegt, wobei aus der Verschiebung des beweglichen Messelementes (4) in seiner Bewegungsebene (9) relativ zu den ortsfesten Kontaktelementen (4, 5) die lokale Biegung des gebogenen Profils (1) oder Rohrs ermittelbar ist.

2.  Vorrichtung gemäß Anspruch 1, **dadurch gekennzeichnet, dass** die festen Kontaktelemente (3, 5) außenliegend und das verschiebbare Messelement (4) zwischen den festen Kontaktelementen (3, 5) und zu diesen beabstandet, vorzugsweise mittig zwischen den festen Kontaktelementen (3, 5) angeordnet sind, oder das erste feste Kontaktelement (3) und das verschiebbare Messelement (4) außenliegend und das zweite feste Kontaktelement (5) zwischen dem ersten festen Kontaktelement (3) und dem verschiebbaren Messelement (4) angeordnet sind.

3. Vorrichtung gemäß einem der vorstehenden Ansprüche, **dadurch gekennzeichnet, dass** der Abstand zwischen festen Kontaktelementen (3, 5) und dem verschiebbaren Messelement (4) veränderbar einstellbar ist, um die Messgenauigkeit der Vorrichtung zu verändern.

4. Vorrichtung gemäß einem der vorstehenden Ansprüche, **dadurch gekennzeichnet, dass** das Profil (1) oder Rohr entlang seiner Längsrichtung (10) relativ zu der Anordnung der Kontaktelemente (3, 4, 5) durch die Öffnungen (22) der Kontaktelemente (3, 4, 5) hindurch verschiebbar ist und aufgrund der relativen Anordnung von festen Kontaktelementen (3, 5) und Messelement (4) die lokale Biegung des gebogenen Profils (1) oder Rohrs bestimmbar ist, wobei insbesondere die lokale Biegung des gebogenen (1) Profils oder Rohrs aus der Lage der Berührungspunkte (A, B, C) zwischen Profil (1) oder Rohr und den Kontaktelementen (3, 4, 5) geometrisch ermittelbar ist, vorzugsweise die Biegung des gebogenen Profils (1) oder Rohrs als Abfolge von jeweils lokalen Durchschnittswerten für die Biegung entlang der Längsachse (10) des Profils (1) oder Rohrs ermittelbar ist.

5. Vorrichtung gemäß Anspruch 4, **dadurch gekennzeichnet, dass** die Biegeebene durch die Berührungspunkte (A, B, C) zwischen Profil (1) oder Rohr und den Kontaktelementen (3, 4, 5) definierbar ist und/oder der Profildrehwinkel aus der Veränderung der Biegeebene entlang der Längsrichtung (10) des Profils (1) oder Rohrs definierbar ist.

6. Vorrichtung gemäß einem der vorstehenden Ansprüche, **dadurch gekennzeichnet, dass** an oder benachbart zu den Kontaktelementen (3, 4, 5) ein Messglied (21) zur Bestimmung der Relativbewegung (2) entlang der Längsrichtung (10) zwischen dem gebogenen Profil (1) oder Rohr und den Kontaktelementen (3, 4, 5) angeordnet ist, wobei das Messglied (21) die relative Verschiebung zwischen Profil (1) oder Rohr und den Kontaktelementen (3, 4, 5) und/oder die relative Verdrehung zwischen rundem Rohr (1) und den Kontaktelementen (3, 4, 5) ermittelt.

7. Vorrichtung gemäß Anspruch 6, **dadurch gekennzeichnet, dass** das Messglied (21) berührend mit dem Profil (1) oder Rohr wechselwirkt, vorzugsweise ein auf dem Profil (1) oder Rohr abwälzendes Messrad oder eine Messkugel oder dgl. aufweist, oder das Messglied (21) berührungsfrei mit dem Profil (1) oder Rohr wechselwirkt, vorzugsweise optisch misst.

8. Vorrichtung gemäß einem der vorstehenden Ansprüche, **dadurch gekennzeichnet, dass** das in seiner Bewegungsebene verschiebbare Messelement (4) um eine Achse (8) senkrecht zu seiner Bewegungsebene (9) verdrehbar ist und vorzugsweise die Messeinrichtungen (12, 14, 15, 16) neben der Verschiebung (9) innerhalb der Bewegungsebene auch die Verdrehung (8) des verschiebbaren Messelementes (4) um eine Achse senkrecht zu seiner Bewegungsebene erfassen, wobei insbesondere die Verdrehung (8) des verschiebbaren Messelementes (4) um die Achse senkrecht zu seiner Bewegungsebene der lokalen Querschnittstorsion ($\alpha$) des gebogenen Profils (1) oder Rohrs entspricht.

9. Vorrichtung gemäß einem der vorstehenden Ansprüche, **dadurch gekennzeichnet, dass** mindestens eines der ortsfesten Kontaktelemente (3, 5) um eine Achse (7) senkrecht zu der Bewegungsebene des verschiebbaren Kontaktelementes (4) verdrehbar ist, um sich an Torsionen ($\alpha$) des gebogenen Profils (1) oder Rohrs anzupassen.

10. Vorrichtung gemäß einem der vorstehenden Ansprüche, **dadurch gekennzeichnet, dass** die Kontaktelemente (3, 4, 5) eine vieleckige, vorzugsweise eine viereckige oder dreieckige, plattenförmig berandete Grundform oder eine zumindest abschnittsweise gekrümmte Berandung aufweisen, insbesondere die Kontaktelemente (3, 4, 5), vorzugsweise im Bereich der Berandung angeordnete, Messflächen (13) aufweisen, deren relative Verschiebung und/oder Verdrehung durch mit den Messflächen (13) wechselwirkende Messsensoren (12, 14, 15, 16) geometrisch ermittelbar sind.

11. Vorrichtung gemäß Anspruch 10, **dadurch gekennzeichnet, dass** die Messsensoren (12, 14, 15, 16) mechanisch, vorzugsweise taktil, und/oder kontaktlos, vorzugsweise optisch und/oder elektrisch, vorzugsweise induktiv, mit den Messflächen (13) wechselwirken, um die Verlagerung der Lage der Messflächen (13) für die Messung der Biegung und/oder der Torsion des Profils (1) oder Rohrs zu bestimmen, wobei die mechanischen Messsensoren (12) vorzugsweise als Messtaster oder Seilzugsensoren ausgebildet sind und insbesondere mindestens drei Messsensoren (12, 14, 15, 16), vorzugsweise vier Messsensoren (12, 14, 15, 16), für das Messelement (4) vorgesehen sind.

12. Vorrichtung gemäß Anspruch 11, **dadurch gekennzeichnet, dass** bei der Anordnung von vier Messsensoren (12, 14, 15, 16) je zwei Messsensoren (12, 14, 15, 16) paarweise an der gleichen Kante oder dem gleichen Abschnitt der Berandung des Messelementes (4) angeordnet sind.

13. Vorrichtung gemäß einem der vorstehenden Ansprüche, **dadurch gekennzeichnet, dass** die Messsensoren (12, 14, 15, 16) ortsfest und orientierungsfest oder ortsfest, aber verschwenkbar relativ zu der Berandung des Messelementes (4) an der Vorrichtung angeordnet sind.

14. Vorrichtung gemäß einem der vorstehenden Ansprüche, **dadurch gekennzeichnet, dass** zwischen den mechanischen Messsensoren (12, 14, 15, 16) und den Messflächen (13) des Messelementes (4) ein gleitender oder rollender Kontakt besteht.

15. Vorrichtung gemäß Anspruch 14, **dadurch gekennzeichnet, dass** die Führungselemente (6) Gleitelemente oder bewegliche, vorzugsweise rollende Lagerelemente (19) aufweisen, zu denen das gebogene Profil (1) oder Rohr relativbewegbar ist, insbesondere die Führungselemente (6) austauschbare und hinsichtlich ihrer geometrischen Anordnung auf den Kontaktelementen (3, 4, 5) flexibel positionierbare Gleitelemente oder Lagerelemente (18) aufweisen, vorzugsweise die Führungselemente (6) eine Vielzahl relativ zu dem gebogenen Profil oder Rohr verstellbare Stößel (20) aufweisen, die jeweils punktuell an dem gebogenen Profil (1) oder Rohr anliegen.

16. Vorrichtung gemäß Anspruch 15, **dadurch gekennzeichnet, dass** die Führungselemente (6, 19) selbst Profilierungen aufweisen, die auf die Querschnittsgeometrie des gebogenen Profils (1) oder Rohrs abgestimmt sind.

17. Vorrichtung gemäß einem der Ansprüche 15 oder 16, **dadurch gekennzeichnet, dass** zumindest einzelne der Führungselemente (6) nachgiebig (17) gelagert sind, um bei der Bewegung des gebogenen Profils (1) oder Rohrs durch die Kontaktelemente (3, 4, 5) ein Verklemmen des gebogenen Profils (1) oder Rohrs zu verhindern, insbesondere mindestens eines von zwei im Wesentlichen gegenüberliegend angeordneten Führungselementen (6) nachgiebig (17) gelagert ist.

18. Vorrichtung gemäß einem der vorstehenden Ansprüche, **dadurch gekennzeichnet, dass** die Vorrichtung im Bereich des Auslaufs einer Biegemaschine angeordnet ist und die ermittelten Messwerte der Vorrichtung direkt zur Beeinflussung der Arbeitsweise der Biegemaschine, insbesondere zur geometrischen Ausführung der Biegebearbeitung genutzt wird, vorzugsweise die Vorrichtung um die Längsachse des Profils (1) oder Rohrs verdrehbar im Bereich des Auslaufs einer Biegemaschine angeordnet ist.

19. Vorrichtung gemäß Anspruch 18, **dadurch gekennzeichnet, dass** die Vorrichtung gewichtsentlastet im Bereich des Auslaufs einer Biegemaschine aufgehängt ist.

20. Verwendung einer Vorrichtung gemäß Anspruch 1, **dadurch gekennzeichnet, dass** die Vorrichtung zur Ermittlung von Prozessparametern des Biegeprozesses oder der Biegemaschine und/oder von Werkstoffparametern des Profils (1) oder Rohres genutzt wird, indem die Biegung mindestens eines vorab probehalber gebogenen Profils (1) oder Rohrs gemessen und ausgewertet wird, insbesondere anhand der gemessenen Biegung eines vorab probehalber gebogenen Profils (1) oder Rohrs eine Biegemomenten/Biegekrümmungskurve oder eine Fließkurve oder eine Spannungs-/Dehnungskurve aufgestellt wird, und/oder anhand der Biegemomenten/Biegekrümmungskurve oder der Fließkurve oder der Spannungs-/Dehnungskurve der Biegeprozess nachfolgend zu biegender Profile (1) oder Rohre optimiert werden kann.

**Claims**

1. Device for tactile detection and analysis of the geometry of bent profiles (1) or tubes, having at least three contact elements (3, 4, 5) which are spaced apart from one another in the longitudinal direction of the profile (1) or tube and touch the surface of the profile (1) or tube, two contact elements (3, 5) being arranged essentially fixedly relative to one another and one of the contact elements (4) being arranged displaceable as a measuring element (4) relative to the other contact elements (3, 5) in a plane of movement (9) which is aligned perpendicularly to the connecting line between the two other contact elements (3, 5), and measuring devices (12, 14, 15, 16) which detect the change in position of the displaceable measuring element (4),

   **characterised in that**
   the contact elements (3, 4, 5) have a disc-like structure and in each case an opening (22) for the passage of the bent profile (1) or tube through the contact elements (3, 4, 5) and guide elements (6, 18, 19) are arranged in the circumferential region of the openings (22), against which the bent profile (1) or tube bears in a defined manner, wherein it is possible to determine the local bending of the bent profile (1) or tube from the displacement of the movable measuring element (4) in its plane of movement (9) relative to the stationary contact elements (4, 5).

2. Device according to claim 1, **characterized in that** the fixed contact elements (3, 5) are arranged external and the displaceable measuring element (4) is arranged between and spaced apart from the fixed contact elements (3, 5), preferably centrally between the fixed contact elements (3, 5), or the first fixed contact element (3) and the displaceable measuring element (4) are arranged external and the second fixed contact element (5) is arranged between the first fixed contact element (3) and the displaceable measuring element (4).

3. Device according to one of the above claims, **characterized in that** the distance between fixed contact elements (3, 5) and the displaceable measuring element (4) is variably adjustable in order to vary the measuring accuracy of the device.

4. Device according to one of the preceding claims, **characterized in that** the profile (1) or tube is displaceable along its longitudinal direction (10) relative to the arrangement of the contact elements (3, 4, 5) through the openings (22) of the contact elements (3, 4, 5) and the local bending of the bent profile (1) or tube is determinable on the basis of the relative arrangement of fixed contact elements (3, 5) and measuring element (4), wherein in particular the local bending of the bent (1) profile or tube can be determined geometrically from the position of the contact points (A, B, C) between the profile (1) or tube and the contact elements (3, 4, 5), preferably the bending of the bent profile (1) or tube can be determined as a sequence of respective local average values for the bending along the longitudinal axis (10) of the profile (1) or tube.

5. Device according to claim 4, **characterized in that** the bending plane can be defined by the contact points (A, B, C) between the profile (1) or tube and the contact elements (3, 4, 5) and/or the profile angle of rotation can be defined from the change in the bending plane along the longitudinal direction (10) of the profile (1) or tube.

6. Device according to one of the above claims, **characterized in that** on or adjacent to the contact elements (3, 4, 5) a measuring member (21) for determining the relative movement (2) along the longitudinal direction (10) between the bent profile (1) or tube and the contact elements (3, 4, 5) is arranged, the measuring element (21) determining the relative displacement between the profile (1) or tube and the contact elements (3, 4, 5) and/or the relative rotation between the round tube (1) and the contact elements (3, 4, 5).

7. Device according to claim 6, **characterized in that** the measuring element (21) interacts with the profile (1) or tube in contact, preferably has a measuring wheel or a measuring ball or the like rolling on the profile (1) or tube, or the measuring element (21) interacts with the profile (1) or tube without contact, preferably measures optically.

8. Device in accordance with one of the above claims, **characterised in that** the measuring element (4), which can be displaced in its plane of movement, can be rotated about an axis (8) perpendicular to its plane of movement (9) and preferably the measuring devices (12, 14, 15, 16) can determine in addition to the displacement (9) within the plane of movement also the rotation (8) of the displaceable measuring element (4) about an axis perpendicular to its plane of movement, wherein in particular the rotation (8) of the displaceable measuring element (4) about the axis perpendicular to its plane of movement corresponds to the local cross-sectional torsion ($\alpha$) of the bent profile (1) or tube.

9. Device according to one of the above claims, **characterized in that** at least one of the fixed contact elements (3, 5) is rotatable about an axis (7) perpendicular to the plane of movement of the displaceable contact element (4) in order to adapt to torsions ($\alpha$) of the bent profile (1) or tube.

10. Device according to one of the above claims, **characterized in that** the contact elements (3, 4, 5) have a polygonal, preferably a quadrangular or triangular, plate-shaped edge basic shape or an at least sectionally curved edge, in particular the contact elements (3, 4, 5) have measuring surfaces (13), preferably arranged in the region of the edge, the relative displacement and/or rotation of which can be determined geometrically by measuring sensors (12, 14, 15, 16) interacting with the measuring surfaces (13).

11. Device according to claim 10, **characterized in that** the measuring sensors (12, 14, 15, 16) interact mechanically, preferably tactilely, and/or contactlessly, preferably optically and/or electrically, preferably inductively, with the measuring surfaces (13) in order to determine the displacement of the position of the measuring surfaces (13) for measuring the bending and/or the torsion of the profile (1) or tube, the mechanical measuring sensors (12) preferably being designed as measuring probes or draw-wire sensors and in particular at least three measuring sensors (12, 14, 15, 16), preferably four measuring sensors (12, 14, 15, 16) are provided for the measuring element (4).

12. Device according to claim 11, **characterized in that**, when four measuring sensors (12, 14, 15, 16) are arranged, two measuring sensors (12, 14, 15, 16) each are arranged in pairs on the same edge or the same section of the edge of the measuring sensor

**13.** Device according to one of the above claims, **characterized in that** the measuring sensors (12, 14, 15, 16) are arranged fixedly and orieritationally fixed or fixedly but pivotably relative to the edge of the measuring element (4) on the device.

**14.** Device according to one of the above claims, **characterized in that** there is a sliding or rolling contact between the mechanical measuring sensors (12, 14, 15, 16) and the measuring surfaces (13) of the measuring element (4).

**15.** Device according to claim 14, **characterized in that** the guide elements (6) have sliding elements or movable, preferably rolling, support elements (19), to which the bent profile (1) or tube can be moved in relation, in particular the guide elements (6) have exchangable sliding elements or bearing elements (18) which can be flexibly positioned with regard to their geometric arrangement on the contact elements (3, 4, 5), preferably the guide elements (6) have a multiplicity of plungers (20) which can be adjusted relative to the bent profile (1) or tube and which in each case rest punctually against the bent profile (1) or tube.

**16.** Device according to claim 15, **characterized in that** the guide elements (6, 19) themselves have profiles which are matched to the cross-sectional geometry of the bent profile (1) or tube.

**17.** Device according to one of claims 15 or 16, **characterized in that** at least some of the guide elements (6) are resiliently supported (17) in order to prevent the bent profile (1) or tube from jamming during the movement of the bent profile (1) or tube through the contact elements (3, 4, 5), in particular at least one of two guide elements (6) arranged substantially opposite to another is resiliently supported (17).

**18.** Device according to one of the above claims, **characterized in that** the device is arranged in the region of the outlet of a bending machine and the measured values determined by the device are used directly to influence the mode of operation of the bending machine, in particular for the geometric execution of the bending operation, preferably the device is arranged so as to be rotatable about the longitudinal axis of the profile (1) or tube in the region of the outlet of a bending machine.

**19.** Device according to claim 18, **characterised in that** the device is suspended weight-relieved in the region of the outlet of a bending machine.

**20.** Use of a device according to claim 1, **characterized**

**in that** the device is used for determining process parameters of the bending process or of the bending machine and/or of material parameters of the profile (1) or tube by measuring and evaluating the bending of at least one profile (1) or tube which has been bent in advance for testing purposes, in particular, a bending torque/bend curvature curve or a flow curve or a stress/strain curve is set up in particular on the basis of the measured bending of a profile (1) or tube previously bent for test purposes, and/or the bending torque/bend curvature curve or the flow curve or the stress/strain curve can be used to optimise the bending process for profiles (1) or tubes to be bent subsequently.

**Revendications**

**1.** Dispositif de détection et d'analyse tactiles de la géométrie de profilés (1) ou tubes cintrés, présentant au moins trois éléments de contact (3, 4, 5) espacés les uns des autres dans le sens longitudinal du profilé (1) ou tube, qui touchent la surface du profilé (1) ou tube, dans lequel deux éléments de contact (3, 5) sont agencés sensiblement fixement l'un par rapport à l'autre et un des éléments de contact (4) est mobile en tant qu'élément de mesure (4) par rapport aux autres éléments de contact (3, 5) dans un plan de déplacement (9), qui est orienté perpendiculairement à la ligne de raccordement entre les deux autres éléments de contact (3, 5), ainsi que des dispositifs de mesure (12, 14, 15, 16) qui détectent la modification de position de l'élément de mesure mobile (4),

**caractérisé en ce que**

les éléments de contact (3, 4, 5) présentent une structure de type disque et respectivement une ouverture (22) pour le passage du profilé (1) ou tube cintré par les éléments de contact (3, 4, 5) et des éléments de guidage (6, 18, 19) sont agencés dans la zone périphérique des ouvertures (22), contre lesquels le profil (1) ou tube cintré repose de manière définie, dans lequel le pliage local du profilé (1) ou tube cintré peut être déterminé à partir du déplacement de l'élément de mesure (4) mobile dans son plan de déplacement (9) par rapport aux éléments de contact fixes (4, 5).

**2.** Dispositif selon la revendication 1, **caractérisé en ce que** les éléments de contact fixes (3, 5) sont agencés à l'extérieur et l'élément de mesure (4) mobile entre les éléments de contact fixes (3, 5) et à distance de ceux-ci, de préférence au milieu entre les éléments de contact fixes (3, 5), ou le premier élément de contact fixe (3) et l'élément de mesure mobile (4) sont agencés à l'extérieur et le second élément de contact fixe (5) entre le premier élément de contact fixe (3) et l'élément de mesure mobile (4).

**3.** Dispositif selon l'une quelconque des revendications précédentes, **caractérisé en ce que** la distance entre des éléments de contact fixes (3,5) et l'élément de mesure (4) mobile est réglable de manière modifiable afin de modifier la précision de mesure du dispositif.

**4.** Dispositif selon l'une quelconque des revendications précédentes, **caractérisé en ce que** le profilé (1) ou tube est mobile le long de son sens longitudinal (10) par rapport à l'agencement des éléments de contact (3, 4, 5) au travers des ouvertures (22) des éléments de contact (3, 4, 5) et le pliage local du profilé (1) ou tube cintré peut être déterminé en raison de l'agencement relatif d'éléments de contact (3, 5) fixes et d'élément de mesure (4), dans lequel en particulier le pliage local du profilé (1) ou tube cintré peut être déterminé géométriquement à partir de la position des points de contact (A, B, C) entre le profilé (1) ou tube et les éléments de contact (3, 4, 5), de préférence le pliage du profilé (1) ou tube cintré peut être déterminé en tant que suite de valeurs moyennes locales respectivement pour le pliage le long de l'axe longitudinal (10) du profilé (1) ou tube.

**5.** Dispositif selon la revendication 4, **caractérisé en ce que** le plan de pliage peut être défini par les points de contact (A, B, C) entre le profilé (1) ou tube et les éléments de contact (3, 4, 5) et/ou l'angle de rotation de profilé peut être défini à partir de la modification du plan de pliage le long du sens longitudinal (10) du profilé (1) ou tube.

**6.** Dispositif selon l'une quelconque des revendications précédentes, **caractérisé en ce qu'**un organe de mesure (21) est agencé sur ou de manière contiguë aux éléments de contact (3, 4, 5) pour la détermination du mouvement ·relatif (2) le long du sens longitudinal (10) entre le profilé (1) ou tube cintré et les éléments de contact (3, 4, 5), dans lequel l'organe de mesure (21) détermine le déplacement relatif entre le profilé (1) ou tube et les éléments de contact (3, 4, 5) et/ou la rotation relative entre le tube rond (1) et les éléments de contact (3, 4, 5).

**7.** Dispositif selon la revendication 6, **caractérisé en ce que** l'organe de mesure (21) interagit par contact avec le profilé (1) ou tube, de préférence présente une roue de mesure roulant sur le profilé (1) ou tube ou une sphère de mesure ou similaire, ou l'organe de mesure (21) interagit sans contact avec le profilé (1) ou tube, de préférence le mesure optiquement.

**8.** Dispositif selon l'une quelconque des revendications précédentes, **caractérisé en ce que** l'élément de mesure (4) mobile dans son plan de déplacement peut être tourné autour d'un axe (8) perpendiculairement à son plan de déplacement (9) et de préférence les dispositifs de mesure (12, 14, 15, 16) détectent outre le déplacement (9) dans le plan de déplacement aussi la rotation (8) de l'élément de mesure (4) mobile autour d'un axe perpendiculairement à son plan de déplacement, dans lequel en particulier la rotation (8) de l'élément de mesure (4) mobile autour de l'axe perpendiculaire à son plan de déplacement correspond à la torsion de section transversale ($\alpha$) locale du profilé (1) ou tube cintré.

**9.** Dispositif selon l'une quelconque des revendications précédentes, **caractérisé en ce qu'**au moins un des éléments de contact (3, 5) fixes peut être tourné autour d'un axe (7) perpendiculairement au plan de déplacement de l'élément de contact (4) mobile afin de s'adapter aux torsions ($\alpha$) du profilé (1) ou tube cintré.

**10.** Dispositif selon l'une quelconque des revendications précédentes, **caractérisé en ce que** les éléments de contact (3, 4, 5) présentent une forme de base polygonale, de préférence carrée ou triangulaire, délimitée en forme de plaque ou une délimitation au moins par section courbée, en particulier les éléments de contact (3, 4, 5) présentent des surfaces de mesure (13) agencées de préférence dans la zone de délimitation, dont le déplacement relatif et/ou la rotation peut être déterminée géométriquement par des capteurs de mesure (12, 14, 15, 16) interagissant avec les surfaces de mesure (13).

**11.** Dispositif selon la revendication 10, **caractérisé en ce que** les capteurs de mesure (12, 14, 15, 16) interagissent mécaniquement, de préférence tactilement, et/ou sans contact, de préférence optiquement et/ou électriquement, de préférence inductivement, avec les surfaces de mesure (13) afin de déterminer le déplacement de la position des surfaces de mesure (13) pour la mesure du pliage et/ou de la torsion du profilé (1) ou tube, dans lequel les capteurs de mesure (12) mécaniques sont réalisés de préférence en tant que palpeur de mesure ou capteurs à câble Bowden et en particulier au moins trois capteurs de mesure (12, 14, 15, 16) sont prévus, de préférence quatre capteurs de mesure (12, 14, 15, 16), pour l'élément de mesure (4).

**12.** Dispositif selon la revendication 11, **caractérisé en ce que** pour l'agencement de quatre capteurs de mesure (12, 14, 15, 16) deux capteurs de mesure (12, 14, 15, 16) sont agencés chaque fois par paires sur l'arête identique ou la même section de délimitation de l'élément de mesure (4).

**13.** Dispositif selon l'une quelconque des revendications précédentes, **caractérisé en ce que** les capteurs de mesure (12, 14, 15, 16) sont agencés fixement et à orientation fixe ou fixement, mais de manière pivotante par rapport à la délimitation de l'élément de mesure (4) sur le dispositif.

14. Dispositif selon l'une quelconque des revendications précédentes, **caractérisé en ce qu'**un contact glissant ou roulant existe entre les capteurs de mesure mécaniques (12, 14, 15, 16) et les surfaces de mesure (13) de l'élément de mesure (4).

15. Dispositif selon la revendication 14, **caractérisé en ce que** les éléments de guidage (6) présentent des éléments glissants ou des éléments de palier (19) mobiles, de préférence roulants, vers lesquels le profilé (1) ou tube cintré peut être déplacé relativement, en particulier les éléments de guidage (6) présentent des éléments glissants ou éléments de palier (18) remplaçables et positionnables de manière flexible en ce qui concerne leur agencement géométrique sur les éléments de contact (3, 4, 5), de préférence les éléments de guidage (6) présentent une pluralité de coulisseaux (20) réglables par rapport au profilé ou tube cintré qui reposent respectivement ponctuellement contre le profil (1) ou tube cintré.

16. Dispositif selon la revendication 15, **caractérisé en ce que** les éléments de guidage (6, 19) eux-mêmes présentent des profilages qui sont adaptés à la géométrie de section transversale du profilé (1) ou tube cintré.

17. Dispositif selon l'une quelconque des revendications 15 ou 16, **caractérisé en ce qu'**au moins certains des éléments de guidage (6) sont logés de manière flexible (17) afin d'empêcher lors du déplacement du profilé (1) ou tube cintré par les éléments de contact (3, 4, 5) un serrage du profilé (1) ou tube cintré, en particulier au moins un de deux éléments de guidage (6) agencés sensiblement à l'opposé est logé de manière flexible (17).

18. Dispositif selon l'une quelconque des revendications précédentes, **caractérisé en ce que** le dispositif est agencé dans la zone de la sortie d'une machine de pliage et les valeurs de mesure déterminées du dispositif sont utilisées directement pour l'influence du fonctionnement de la machine de pliage, en particulier est utilisé pour la réalisation géométrique de l'usinage de pliage, de préférence le dispositif est agencé de manière à pouvoir tourner autour de l'axe longitudinal du profilé (1) ou tube dans la zone de la sortie d'une machine de pliage.

19. Dispositif selon la revendication 18, **caractérisé en ce que** le dispositif est suspendu sans charge de poids dans la zone de la sortie d'une machine de pliage.

20. Utilisation d'un dispositif selon la revendication 1, **caractérisée en ce que** le dispositif est utilisé pour la détermination de paramètres de processus du processus de pliage ou de la machine de pliage et/ou de paramètres de matériau du profilé (1) ou tube, **en ce que** le pliage d'au moins un profilé (1) ou tube cintré essayé précédemment est mesuré et est évalué, en particulier au moyen du pliage mesuré d'un profilé (1) ou tube cintré essayé précédemment une courbe de courbure de pliage/couple de pliage ou une courbe d'écoulement ou une courbé de tension/extension est placée, et/ou le processus de pliage peut être optimisé au moyen de la courbe de courbure de pliage/couple de pliage ou la courbure d'écoulement ou la courbe de tension/extension ensuite en profilé (1) ou tube pliant.

Fig. 1

Fig. 2

Fig. 3a

Fig. 3b

Fig. 4a

Fig. 4b

Fig. 4c

Fig. 4d

Fig. 5a

Fig. 5b

Fig. 5c

Fig. 5d

Fig. 6

Fig. 7

Fig. 8

Fig. 9

21

6

6

6

A   B   C

1

## Fig. 10

Berechnete
Biegemomenten-
Krümmungskurve

Punkt berechnet aus
Streck-/Dehngrenze
und E-Modul

$M_b$

Biegemoment

Reale
Biegemomenten-
Krümmungskurve

Krümmung $\kappa$

gemessene
Krümmung

Soll-
Krümmung

## Fig. 11

Kurvenpunkte gebildet aus
Schnittpunkten der
elastischen Geraden und
den Soll-Krümmungen

Schnittpunkt berechnet
aus Interpolierter
Biegemomenten-
Krümmungskurve und
elastischer Geraden

Biegemomenten-
Krümmungskurve die bei
Verwendung des E-
Moduls des Profils und
Nichtbeachtung der
Maschinensteifigkeit die
gleiche Rückfederung
beschreibt wie die Kurve
inklusive
Maschinensteifigkeit

Elastische Gerade:
Profilsteifigkeit

Reine
Biegemomenten-
Krümmungskurve
des Rohrs oder
Profils

Reale Biegemomenten-
Krümmungskurve
inklusive Auswirkungen
der Maschinensteifigkeit

Elastische Gerade:
Machinensteifigkeit
+ Profilsteifigkeit

Krümmung die
entstehen
würde bei einer
ideal steifen
Biegemaschine

Soll-
Krümmung

Krümmung κ

Biegemoment M$_b$

gemessene
Krümmung

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19947617 A1
- DE 3043042 A1
- JP H06300504 A

**In der Beschreibung aufgeführte Nicht-Patentliteratur**

- Prozessmodelle zum Drei-Rollen-Schubbiegen von Rohrprofilen. **KERSTEN, SEBASTIAN.** Dissertation. Universität Siegen, 2013